(19) Europäisches Patentamt / European Patent Office / Office européen des brevets

(11) **EP 3 683 869 A1**

(12) **EUROPEAN PATENT APPLICATION**
published in accordance with Art. 153(4) EPC

(43) Date of publication:
**22.07.2020 Bulletin 2020/30**

(21) Application number: **18856863.8**

(22) Date of filing: **07.09.2018**

(51) Int Cl.:
*H01M 4/1391* (2010.01)   *C01G 53/00* (2006.01)
*H01M 4/505* (2010.01)   *H01M 4/525* (2010.01)

(86) International application number:
**PCT/JP2018/033216**

(87) International publication number:
**WO 2019/054296 (21.03.2019 Gazette 2019/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.09.2017 JP 2017175657**

(71) Applicants:
• **Sumitomo Chemical Company, Limited**
  **Tokyo 104-8260 (JP)**
• **Tanaka Chemical Corporation**
  **Fukui-shi**
  **Fukui 910-3131 (JP)**

(72) Inventors:
• **AKIYAMA Katsuhiro**
  **Niihama-shi**
  **Ehime 792-8521 (JP)**
• **NAKAO Kimiyasu**
  **Fukui-shi**
  **Fukui 910-3131 (JP)**
• **KOBAYASHI Ryota**
  **Fukui-shi**
  **Fukui 910-3131 (JP)**

(74) Representative: **Vossius & Partner**
**Patentanwälte Rechtsanwälte mbB**
**Siebertstrasse 3**
**81675 München (DE)**

(54) **METHOD FOR MANUFACTURING LITHIUM SECONDARY BATTERY POSITIVE ELECTRODE ACTIVE MATERIAL**

(57)    A method for manufacturing a positive-electrode active material for a lithium secondary battery includes: a step of continuously calcining a powder mixture containing a lithium compound and a positive-electrode active material precursor in a heating facility of a fixed bed conveyance system, while conveying the powder mixture in a direction from an inlet to an outlet of the heating facility and heating the powder mixture, in which, with respect to a conveyance direction of the powder mixture, an amount of a gas supplied from an outside of the heating facility to an inside of the heating facility in a region from a center portion of the heating facility to the outlet is larger than an amount of a gas supplied from the outside of the heating facility to the inside of the heating facility in a region from the center portion of the heating facility to the inlet, and an amount of a gas exhausted from the inside of the heating facility to the outside of the heating facility in the region from the center portion of the heating facility to the inlet is larger than an amount of a gas exhausted from the inside of the heating facility to the outside of the heating facility in the region from the center portion of the heating facility to the outlet.

**Description**

TECHNICAL FIELD

The present invention relates to a method for manufacturing a positive-electrode active material for a lithium secondary battery.

Priority is claimed on Japanese Patent Application No. 2017-175657, filed on September 13, 2017, the content of which is incorporated herein by reference.

BACKGROUND ART

A lithium composite oxide has been used as a positive-electrode active material for a lithium secondary battery. Lithium secondary batteries have been already in practical use not only for small power sources in mobile phone applications, notebook personal computer applications, and the like but also for medium-sized and large-sized power sources in automotive applications, power storage applications, and the like.

A method for manufacturing a lithium metal composite oxide generally includes a mixing step of mixing a lithium compound raw material and a positive-electrode active material precursor, and a calcining step of calcining the obtained mixture. In the calcining step in the method for manufacturing a positive-electrode active material, a fixed bed conveyance system such as a roller hearth kiln is generally used. In the case of the fixed bed conveyance system, an object to be calcined is filled in a container and conveyed so as to be continuously calcined. Therefore, the facility is simple, and there is little restriction in selecting the material of a powder contact part. Therefore, there is also an advantage in that calcining can be performed at a high temperature of, for example, 800°C or higher.

The calcining conditions in the calcining step greatly affect the crystal growth of the positive-electrode active material. Therefore, controlling the calcining conditions is important for improving the battery characteristics of a battery which uses a positive-electrode material for a lithium secondary battery.

PTL 1 describes a method for manufacturing a composite oxide primarily containing lithium and a transition metal, in which calcining is performed while forcibly passing heated air or oxygen, or a mixed gas of oxygen and nitrogen through a mixed powder primarily containing a lithium compound and a transition metal.

Citation List

Patent Literature

[PTL 1] Japanese Unexamined Patent Application, First Publication No. H5-062678

DISCLOSURE OF INVENTION

Technical Problem

Although a heating facility of the fixed bed conveyance system has the above-mentioned advantages, there is a problem that the calcining efficiency is lower than that of a heating facility of a flowing type such as a rotary kiln.

The present invention has been made in view of the above circumstances, and an object thereof is to provide a method for manufacturing a positive-electrode active material for a lithium secondary battery having high calcining efficiency in a case of using a heating facility of a fixed bed conveyance system.

Solution to Problem

That is, the present invention includes the following [1] to [10].

[1] A method for manufacturing a positive-electrode active material for a lithium secondary battery, including: a calcining step of continuously calcining a powder mixture containing a lithium compound and a positive-electrode active material precursor in a heating facility of a fixed bed conveyance system, while conveying the powder mixture, in which, with respect to a supply direction of the powder mixture, an amount of a gas supplied from an outside of the heating facility to an inside of the heating facility in a region from a center portion of the heating facility to an outlet where the powder mixture exits the heating facility is larger than an amount of a gas supplied from the outside of the heating facility to the inside of the heating facility in a region from the center portion of the heating facility to an inlet where the powder mixture enters the heating facility, and an amount of a gas exhausted from the inside of the heating facility to the outside of the heating facility in the region from the center portion of the heating facility to the inlet where the powder mixture enters the heating facility is larger than an amount of a gas exhausted from the inside of the heating facility to the outside of the heating facility in the region from the center portion of the heating facility to the outlet where the powder mixture exits the heating facility.

[2] The method for manufacturing a positive-electrode active material for a lithium secondary battery according to [1], in which the heating facility includes at least one or more gas supply ports that supply all of the gas in the vicinity of the outlet of the powder mixture, and at least one or more gas exhaust ports that exhaust all of the supplied gas and a gas generated by the calcining in the vicinity of the inlet of the powder mixture.

[3] The method for manufacturing a positive-electrode active material for a lithium secondary battery according to [1] or [2], in which, in the calcining step, the gas is brought into countercurrent contact with the powder mixture.

[4] The method for manufacturing a positive-electrode active material for a lithium secondary battery according to [2] or [3], in which, in the calcining step, all of the gas is supplied from the gas supply port.

[5] The method for manufacturing a positive-electrode active material for a lithium secondary battery according to any one of [1] to [4], in which, the positive-electrode active material for a lithium secondary battery is expressed by Composition Formula (I).

$Li[Li_x(Ni_{(1-y-z-w)}Co_yMn_zM_w)_{1-x}]O_2$ ...(I) (in Composition Formula (I), $-0.1 \leq x \leq 0.2$, $0 < y \leq 0.5$, $0 \leq z \leq 0.8$, $0 \leq w \leq 0.1$, $1-y-z-w < 1$, and $y+z+w < 1$ are satisfied, and M is one or more metals selected from the group consisting of Fe, Cu, Ti, Mg, Al, W, B, Mo, Nb, Zn, Sn, Zr, Ga, and V)

[6] The method for manufacturing a positive-electrode active material for a lithium secondary battery according to any one of [1] to [5], in which a ratio of a gas supply rate ($Nm^3$/min) to a supply rate (kg/min) of the powder mixture is 0.5 $Nm^3$/kg or more.

[7] The method for manufacturing a positive-electrode active material for a lithium secondary battery according to any one of [1] to [6], in which a concentration of oxygen contained in the gas supplied to the inside of the heating facility is 20 vol% or more.

[8] The method for manufacturing a positive-electrode active material for a lithium secondary battery according to any one of [1] to [7], in which the calcining step is performed at 500°C or higher and 1100°C or lower.

[9] The method for manufacturing a positive-electrode active material for a lithium secondary battery according to any one of [1] to [8], in which the heating facility is a roller hearth kiln.

[10] The method for manufacturing a positive-electrode active material for a lithium secondary battery according to any one of [1] to [9], in which a concentration of carbon dioxide contained in the gas exhausted to the outside of the heating facility is 20 vol% or less.

In another aspect, the present invention includes the inventions of the following [1] to [10].

[1] A method for manufacturing a positive-electrode active material for a lithium secondary battery, including: a step of continuously calcining a powder mixture containing a lithium compound and a positive-electrode active material precursor in a heating facility of a fixed bed conveyance system, while conveying the powder mixture in a direction from an inlet to an outlet of the heating facility and heating the powder mixture, in which, with respect to a conveyance direction of the powder mixture, an amount of a gas supplied from an outside of the heating facility to an inside of the heating facility in a region from a center portion of the heating facility to the outlet is larger than an amount of a gas supplied from the outside of the heating facility to the inside of the heating facility in a region from the center portion of the heating facility to the inlet, and an amount of a gas exhausted from the inside of the heating facility to the outside of the heating facility in the region from the center portion of the heating facility to the inlet is larger than an amount of a gas exhausted from the inside of the heating facility to the outside of the heating facility in the region from the center portion of the heating facility to the outlet.

[2] The method for manufacturing a positive-electrode active material for a lithium secondary battery according to [1], in which the heating facility includes at least one or more gas supply ports in the vicinity of the outlet, and at least one or more gas exhaust ports in the vicinity of the inlet, all of the gas supplied from the outside of the heating facility to the inside of the heating facility is supplied from the at least one or more gas supply ports, and all of the gas supplied from the outside of the heating facility to the inside of the heating facility and a gas generated by the calcining of the powder mixture is exhausted from the at least one or more gas exhaust ports.

[3] The method for manufacturing a positive-electrode active material for a lithium secondary battery according to [1] or [2], in which, in the calcining step, the gas supplied from the outside of the heating facility to the inside of the heating facility is brought into countercurrent contact with the powder mixture.

[4] The method for manufacturing a positive-electrode active material for a lithium secondary battery according to [2] or [3], in which, in the calcining step, the number of gas supply ports is one.

[5] The method for manufacturing a positive-electrode active material for a lithium secondary battery according to any one of [1] to [4], in which, the positive-electrode active material for a lithium secondary battery is expressed by Composition Formula (I).

$Li[Li_x(Ni_{(1-y-z-w)}Co_yMn_zM_w)_{1-x}]O_2$ ...(I) (in Composition Formula (I), $-0.1 \leq x \leq 0.2$, $0 < y \leq 0.5$, $0 \leq z \leq 0.8$, $0 \leq w \leq 0.1$, $1-y-z-w < 1$, and $y+z+w < 1$ are satisfied, and M is one or more metals selected from the group consisting of Fe, Cu, Ti, Mg, Al, W, B, Mo, Nb, Zn, Sn, Zr, Ga, and V)

[6] The method for manufacturing a positive-electrode active material for a lithium secondary battery according to any one of [1] to [5], in which a ratio of a gas supply rate ($Nm^3$/min) to a supply rate (kg/min) of the powder mixture is 0.5 $Nm^3$/kg or more.

[7] The method for manufacturing a positive-electrode active material for a lithium secondary battery according to any one of [1] to [6], in which a concentration of oxygen contained in the gas supplied to the inside of the heating facility is 20 vol% or more with respect to a volume of the gas supplied to the inside of the heating facility.

[8] The method for manufacturing a positive-electrode active material for a lithium secondary battery according to any one of [1] to [7], in which the calcining step is performed at 500°C or higher and 1100°C or lower.

[9] The method for manufacturing a positive-electrode active material for a lithium secondary battery according to any one of [1] to [8], in which the heating facility is a roller hearth kiln.

[10] The method for manufacturing a positive-electrode active material for a lithium secondary battery according to any one of [1] to [9], in which a concentration of carbon dioxide contained in the gas exhausted to the outside of the heating facility is 20 vol% or less with respect to a volume of the gas exhausted to the outside of the heating facility.

Advantageous Effects of Invention

According to the present invention, it is possible to provide a method for manufacturing a positive-electrode active material for a lithium secondary battery with high calcining efficiency, in a case of using a heating facility of a fixed bed conveyance system.

BRIEF DESCRIPTION OF DRAWINGS

FIG. 1A is a schematic configuration view illustrating an example of a lithium-ion secondary battery.
FIG. 1B is a schematic configuration view illustrating an example of the lithium-ion secondary battery.
FIG. 2 is a schematic view illustrating an example of a heating facility used in a calcining step of the present embodiment.
FIG. 3 is a schematic view illustrating an example of a heating facility used in a calcining step of a method for manufacturing a positive-electrode active material for a lithium secondary battery of a related art.

BEST MODE FOR CARRYING OUT THE INVENTION

<Method for Manufacturing Positive-Electrode Active Material for Lithium Secondary Battery>

A method for manufacturing a positive-electrode active material for a lithium secondary battery of the present invention includes: a step of continuously calcining a powder mixture containing a lithium compound and a positive-electrode active material precursor placed on a fixed bed in a heating facility of a fixed bed conveyance system, while conveying the powder mixture in a direction from an inlet to an outlet of the heating facility and heating the powder mixture, in which, with respect to a conveyance direction of the powder mixture, the amount of a gas supplied from the outside of the heating facility to the inside of the heating facility in a region from a center portion of the heating facility to the outlet is larger than the amount of a gas supplied from the outside of the heating facility to the inside of the heating facility in a region from the center portion of the heating facility to the inlet, and the amount of a gas exhausted from the inside of the heating facility to the outside of the heating facility in the region from the center portion of the heating facility to the inlet is larger than the amount of a gas exhausted from the inside of the heating facility to the outside of the heating facility in the region from the center portion of the heating facility to the outlet.

In the present embodiment, the calcining step is an essential step, and it is preferable to include a positive-electrode active material precursor manufacturing step, a mixing step, and the calcining step in this order.

Hereinafter, each step will be described.

«Positive-Electrode Active Material Precursor Manufacturing Step»

In the method for manufacturing a positive-electrode active material for a lithium secondary battery according to the present invention, first, it is preferable to prepare a metal composite compound (hereinafter, sometimes referred to as "positive-electrode active material precursor") containing metals other than lithium, that is, essential metals consisting of Ni and Co, and an optional metal consisting of any one or more of Mn, Fe, Cu, Ti, Mg, Al, W, B, Mo, Nb, Zn, Sn, Zr, Ga, and V.

Thereafter, it is preferable that the positive-electrode active material precursor be mixed with an appropriate lithium compound and then calcined. The optional metal is a metal optionally contained in the metal composite compound as desired, and the optional metal may not be contained in the metal composite compound in some cases. As the positive-electrode active material precursor, a metal composite hydroxide or a metal composite oxide is preferable. Hereinafter, an example of a method for manufacturing a positive-electrode active material precursor will be described.

(Step of Manufacturing Positive-Electrode Active Material Precursor)

The positive-electrode active material precursor can be manufactured by a generally known batch coprecipitation method or continuous coprecipitation method. Hereinafter, the manufacturing method will be described in detail, taking a metal composite hydroxide containing nickel, cobalt, and manganese as metals as an example.

First, by a coprecipitation method, particularly a continuous method described in Japanese Unexamined Patent Application, First Publication No. 2002-201028, a nickel salt solution, a cobalt salt solution, a manganese salt solution, and a complexing agent are reacted, whereby a metal composite hydroxide expressed by $Ni_{(1-y-z)}Co_yMn_z(OH)_2$ (in the formula, $0 < y \leq 0.5$, $0 \leq z \leq 0.8$, $1 - y - z < 1$, $y + z < 1$) is manufactured.

A nickel salt which is a solute of the nickel salt solution is not particularly limited, and for example, any of nickel sulfate, nickel nitrate, nickel chloride, and nickel acetate can be used. As a cobalt salt which is a solute of the cobalt salt solution, for example, any of cobalt sulfate, cobalt nitrate, and cobalt chloride can be used. As a manganese salt which is a solute of the manganese salt solution, for example, any of manganese sulfate, manganese nitrate, and manganese chloride can be used. The above metal salts are used at a ratio corresponding to the composition ratio of the $Ni_{(1-y-z)}Co_yMn_z(OH)_2$. That is, the amount of each of the metal salts is defined so that the molar ratio of nickel, cobalt, and manganese in the mixed solution containing the above metal salts becomes $(1 - y - z):y:z$. Also, water is used as a solvent.

The complexing agent is capable of forming a complex with ions of nickel, cobalt, and manganese in an aqueous solution, and examples thereof include ammonium ion donors (ammonium sulfate, ammonium chloride, ammonium carbonate, ammonium fluoride, and the like), hydrazine, ethylenediaminetetraacetic acid, nitrilotriacetic acid, uracildiacetic acid, and glycine. The complexing agent may not be contained, and in a case where the complexing agent is contained, the amount of the complexing agent contained in the mixed solution containing the nickel salt solution, the cobalt salt solution, the manganese salt solution, and the complexing agent is, for example, more than 0 and 2.0 or less in terms of molar ratio to the sum of the number of moles of the metal salts.

During the precipitation, an alkali metal hydroxide (for example, sodium hydroxide, or potassium hydroxide) is added, if necessary, in order to adjust the pH value of the aqueous solution.

When the complexing agent in addition to the nickel salt solution, the cobalt salt solution, and the manganese salt solution is continuously supplied to a reaction tank, nickel, cobalt, and manganese react, whereby $Ni_{(1-y-z)}Co_yMn_z(OH)_2$ is manufactured. During the reaction, the temperature of the reaction tank may be, for example, 20°C or higher and 80°C or lower, and is preferably controlled within a range of 30°C or higher and 70°C or lower. In addition, the pH value in the reaction tank may be, for example, a pH of 9 or more and a pH of 13 or less, and is preferably controlled within a range of a pH of 11 or more and a pH of 13 or less. It is preferable that the substances in the reaction tank be appropriately stirred.

In this specification, the pH value is a value measured at 40°C. Therefore, even if the pH value measured at a different temperature is outside the range described in this specification, in a case where the pH value measured at 40°C is within the range described in this specification, the pH value is understood to be within the scope of the present invention.

The reaction tank is of a type which causes the formed reaction precipitate to overflow for separation.

By appropriately controlling the concentrations of the metal salts supplied to the reaction tank, the stirring speed, the reaction temperature, the reaction pH, calcining conditions, which will be described later, and the like, the finally obtained lithium metal composite oxide can be controlled to have the desired physical properties.

After the above reaction, the obtained reaction precipitate is washed with water and then dried to isolate the metal composite hydroxide. In addition, the reaction precipitate may be washed with weak acid water or an alkaline solution containing sodium hydroxide or potassium hydroxide, as necessary. In the above example, the metal composite hydroxide is manufactured, but a metal composite oxide may be prepared. In a case of preparing the metal composite oxide, for example, a step of bringing the coprecipitate slurry into contact with an oxidizing agent or a step of performing a heat treatment on the metal composite hydroxide may be performed.

The drying condition is not particularly limited. For example, the drying condition may be any of a condition under which a metal composite oxide or metal composite hydroxide is not oxidized and reduced (that is, a condition under which an oxide remains as an oxide and a hydroxide remains as a hydroxide), a condition under which a metal composite hydroxide is oxidized (that is, a condition under which a hydroxide is oxidized to an oxide), and a condition under which a metal composite oxide is reduced (that is, a condition under which an oxide is reduced to a hydroxide).

For the condition under which the metal composite hydroxide is not oxidized and reduced, an inert gas such as nitrogen and a rare gas such as helium and argon may be used.

Under the condition under which the metal composite hydroxide is oxidized, oxygen or air may be used in an atmosphere.

In addition, as the condition under which the metal composite oxide is reduced, a reducing agent such as hydrazine or sodium sulfite may be used in an inert gas atmosphere.

<<Mixing Step>>

In the present embodiment, a powder mixture is obtained by mixing the positive-electrode active material precursor manufactured by the above-described method and a lithium compound.

In this step, the metal composite oxide or metal composite hydroxide is dried and thereafter mixed with a lithium compound.

As the lithium compound, any one of lithium carbonate, lithium nitrate, lithium acetate, lithium hydroxide, lithium hydroxide hydrate, and lithium oxide, or a mixture of two or more thereof can be used.

After drying the metal composite oxide or metal composite hydroxide, classification may be appropriately performed thereon. The lithium compound and the metal composite hydroxide mentioned above are used in consideration of the composition ratio of the final object. For example, in a case where a metal composite hydroxide is used, the lithium compound and the metal composite hydroxide are used in a ratio corresponding to the composition ratio of Composition (I).

«Calcining Step»

The present embodiment includes a calcining step of calcining the powder mixture obtained in the mixing step. By calcining the powder mixture of the positive-electrode active material precursor and the lithium compound, a positive-electrode active material for a lithium secondary battery is obtained. The calcining step is performed using a heating facility. In the present embodiment, a heating facility of a fixed bed conveyance system is used. In addition, it is also effective to perform preliminary calcining before the above-mentioned calcining.

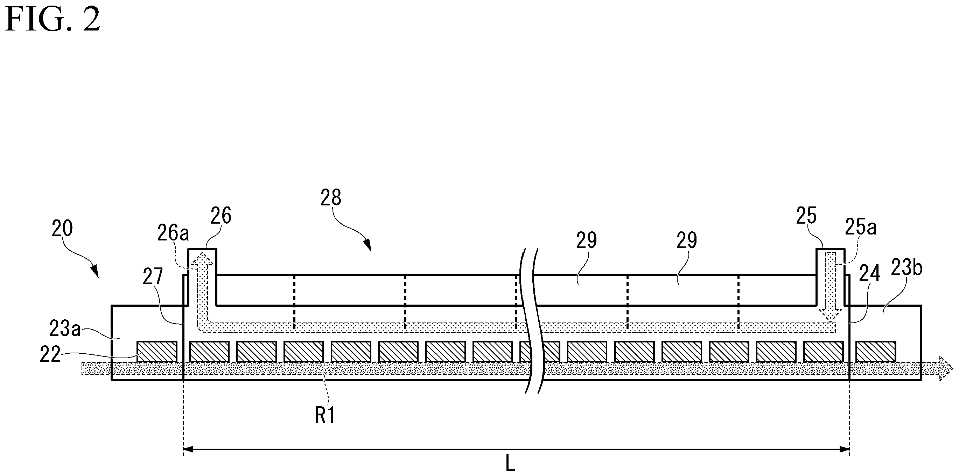

FIG. 2 is a schematic view illustrating a heating facility 20 as an example of a heating facility used in the calcining step of the present embodiment.

The heating facility 20 includes a calcining furnace 28 extending in one direction, and a roller (not illustrated) that conveys sheaths 22 in the calcining furnace 28 in one direction. The sheath 22 is a container filled with the powder mixture in the heating facility of the fixed bed conveyance system.

A first substitution chamber 23a is provided at an inlet 27 of the calcining furnace 28, and a second substitution chamber 23b is provided at an outlet 24.

The powder mixture filling the sheath 22 is first conveyed into the first substitution chamber 23a. When the sheath 22 is conveyed, the first substitution chamber 23a and the calcining furnace 28 are partitioned by a movable wall (not illustrated).

In the first substitution chamber 23a, after the gas inside the first substitution chamber 23a is substituted with the atmosphere in the calcining furnace 28, the movable wall is moved for connection to the inside of the calcining furnace 28. As a result, carry-in of outside air into the calcining furnace 28 is reduced.

The calcining furnace 28 includes one or a plurality of zones 29 independently along a supply direction R1 of the sheaths 22. The temperature of each zone 29 of the calcining furnace 28 can be independently controlled. The powder mixture filling the sheath 22 is calcined while passing through each zone 29.

The sheath 22 that has passed through the calcining furnace 28 is conveyed into the second substitution chamber 23b. In the second substitution chamber 23b, after the sheath 22 is conveyed, the second substitution chamber 23b and the calcining furnace 28 are partitioned by a movable wall (not illustrated). Thereafter, the sheath 22 is conveyed to the outside.

In the present embodiment, with respect to the supply direction (that is, the conveyance direction) R1 of the powder mixture, the amount of a gas supplied from the outside of the heating facility to the inside of the heating facility in a region from the center portion of the heating facility 20 to the outlet where the powder mixture exits the heating facility is larger than the amount of a gas supplied from the outside of the heating facility 20 to the inside of the heating facility in a region from the center portion of the heating facility 20 to the inlet where the powder mixture enters the heating facility. In addition, the amount of a gas exhausted from the inside of the heating facility 20 to the outside of the heating facility 20 in the region from the center portion of the heating facility 20 to the inlet where the powder mixture enters the heating facility is larger than the amount of a gas exhausted from the inside of the heating facility 20 to the outside of the heating facility 20 in the region from the center portion of the heating facility 20 to the outlet where the powder mixture exits the heating facility. Preferably, the calcining step is performed while supplying the gas in one direction from the vicinity of the outlet of the powder mixture to the vicinity of the inlet. The amount of the gas can be measured, for example, by an area flow meter.

In the present embodiment, the "inlet where the powder mixture enters the heating facility" does not mean the inlet of the first substitution chamber 23a but the inlet of the calcining furnace 28. Hereinafter, "the inlet where the powder mixture enters the heating facility" may sometimes be referred to as "the inlet of the powder mixture".

In the present embodiment, "the outlet where the powder mixture exits the heating facility" does not mean the outlet of the second substitution chamber 23b but the outlet of the calcining furnace 28. Hereinafter, "the outlet where the powder mixture exits the heating facility" may sometimes be referred to as "the outlet of the powder mixture".

In the present embodiment, the "center portion of the heating facility" means a region occupying a proportion of 40% to 60% from the inlet side of the calcining furnace 28 when the total length L of the calcining furnace 28 (that is, the length from the inlet of the powder mixture to the outlet of the powder mixture, the same applies hereinafter) is 100%. That is, the region from the center portion of the heating facility 20 to the inlet where the powder mixture enters the heating facility means a region occupying a proportion of 0% to 40% from the inlet side of the calcining furnace 28. The region from the center portion of the heating facility 20 to the outlet where the powder mixture exits the heating facility means a region occupying a proportion of 60% to 100% from the inlet side of the calcining furnace 28.

In the present embodiment, "vicinity of the inlet" means a region occupying a proportion of 0% to 30% from the inlet side of the calcining furnace 28 when the total length L of the calcining furnace 28 is 100%.

In the present embodiment, "vicinity of the outlet" means a region occupying a proportion of 70% to 100% from the inlet side of the calcining furnace 28 when the total length L of the calcining furnace 28 is 100%.

In the present embodiment, "countercurrent contact" means that gas is brought into contact with the powder mixture in a direction opposite (counter) to the supply direction of the powder mixture.

The heating facility 20 suitably used in the present embodiment may have one or more gas exhaust ports 26 in the vicinity of the inlet with respect to the supply direction R1 of the powder mixture. Furthermore, one or more gas supply ports 25 may be provided in the vicinity of the outlet. In a preferred aspect of the present embodiment, the heating facility 20 has one gas exhaust port 26 through which all of the gas supplied to the vicinity of the inlet and the gas generated by calcining is exhausted with respect to the supply direction R1 of the powder mixture, and one gas supply port 25 through which all of the gas is supplied to the vicinity of the outlet. By arranging the gas exhaust port and the gas supply port in this manner, the gas is supplied from the gas supply port 25 in the direction indicated by reference numeral 25a, and the gas is exhausted from the gas exhaust port 26 in the direction indicated by reference numeral 26a, whereby the gas can be supplied in one direction from the vicinity of the outlet of the powder mixture to the vicinity of the inlet.

Here, having one or more gas supply ports through which all of the gas is supplied to the vicinity of the outlet means, in other words, that the gas supply port is present only in the vicinity of the outlet.

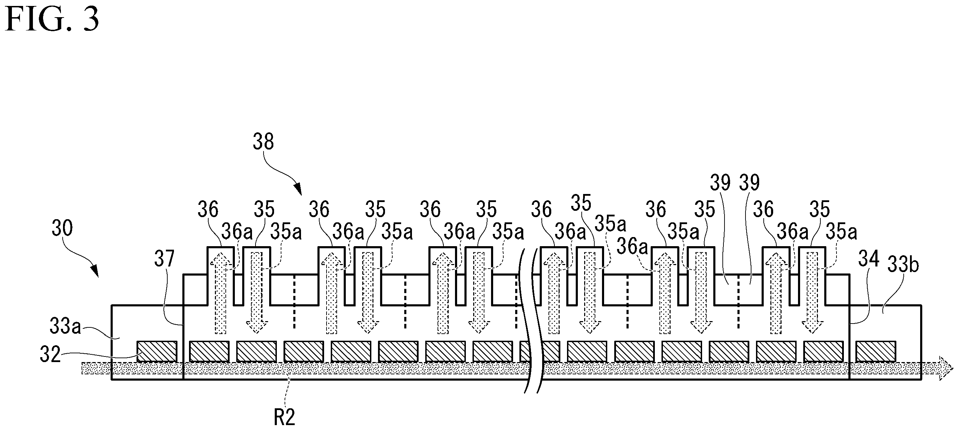

FIG. 3 illustrates a schematic sectional view of an example of a heating facility 30 of the related art. The heating facility 30 of the related art includes gas supply ports 35 and gas exhaust ports 36 at equal intervals between an inlet 37 and an outlet 34.

An object to be calcined filling the sheath 32 enters the heating facility 30 and enters a calcining furnace from the inlet 37 via a substitution chamber 33a. Then, the object to be calcined exits the calcining furnace from the outlet 34, and exits the heating facility via a substitution chamber 33b.

In the present embodiment, the heating facility preferably supplies the gas in one direction from the vicinity of the outlet of the powder mixture to the vicinity of the inlet. In this case, this can be implemented by changing settings, such as closing the gas supply port and the gas exhaust port of the center portion of the heating facility, the gas supply port in the vicinity of the inlet of the powder mixture, and the gas exhaust port in the vicinity of the outlet of the powder mixture, among the existing gas supply ports 35 and gas exhaust ports 36 provided at equal intervals between the inlet 37 and the outlet 34.

In the present embodiment, in a case where the total length of the calcining furnace 28 is 100%, all of the gas supply ports 25 are preferably provided in the vicinity of the outlet, more preferably provided in a range of 70% or more and 99% or less from the inlet side, and even more preferably provided in a range of 75% or more and 95% or less.

Moreover, in an aspect of the present invention, in a case where the total length of the calcining furnace 28 is 100%, all of the gas exhaust ports 26 are preferably provided in the vicinity of the inlet, more preferably provided in a range of 1% or more and 30% or less from the inlet side, and even more preferably provided in a range of 5% or more and 15% or less.

The calcining step is performed continuously while supplying a gas such as dry air or oxygen. Alternatively, in order to adjust the concentration of oxygen of the supplied gas, a gas mixed with an inert gas such as nitrogen may be supplied. In the present embodiment, the gas can be brought into countercurrent contact with the powder mixture. By bringing the gas into contact in the countercurrent method, the concentration of carbon dioxide in a gas phase in the vicinity of the outlet can be reduced, and the concentration of oxygen can be increased. Accordingly, the amount of oxygen in contact with the powder mixture increases, and it is possible to provide a method for manufacturing a positive-electrode active material for a lithium secondary battery with high calcining efficiency. The increase in the concentration of carbon dioxide is due to carbon dioxide generated by decomposition of lithium carbonate contained in the powder mixture.

In the present embodiment, the heating facility 20 is preferably a roller hearth kiln. The roller hearth kiln includes at least a calcining furnace and a roller that transports a sheath filled with a calcining object (the powder mixture in this specification) in one direction, and the calcining furnace includes a heater for heating the calcining object, a supply port for supplying a gas into the calcining furnace, and an exhaust port for exhausting the gas.

In this specification, "calcining efficiency is high" means that the amount of residual lithium carbonate contained in the manufactured positive-electrode active material for a lithium secondary battery is low.

The amount of residual lithium carbonate contained in the positive-electrode active material for a lithium secondary battery can be measured as follows. 20 g of the positive-electrode active material for a lithium secondary battery and 100 g of pure water are put into a 100 mL beaker and stirred for 5 minutes. After the stirring, the positive-electrode active material for a lithium secondary battery is filtered, 0.1 mol/L hydrochloric acid is added dropwise into 60 g of the remaining filtrate, and the pH of the filtrate is measured with a pH meter. Assuming that the titration amount of hydrochloric acid at pH = 8.3 $\pm$ 0.1 is AmL and the titration amount of hydrochloric acid at pH = 4.5 $\pm$ 0.1 is BmL, the concentration of lithium carbonate remaining in the positive-electrode active material for a lithium secondary battery is calculated from the following formula. In the following formula, the molecular weight of lithium carbonate is calculated using Li; 6.941, C; 12, and O; 16 as each atomic weight.

$$\text{Lithium carbonate concentration } (\%) = 0.1 \times (B - A) \text{ / } 1000 \times 73.882 \text{ / } (20 \times 60 \text{ / } 100) \times 100$$

In the present embodiment, the ratio of the gas supply rate ($Nm^3$/min) to the supply rate (kg/min) of the powder mixture is preferably 0.5 $Nm^3$/kg or more, more preferably 0.75 $Nm^3$/kg or more, and particularly preferably 1.0 $Nm^3$/kg or more. The upper limit thereof is not particularly limited, and is, for example, 2.5 $Nm^3$/kg or less, 2.4 $Nm^3$/kg or less, 2.3 $Nm^3$/kg or less.

The upper limit and the lower limit thereof can be randomly combined. For example, the ratio of the gas supply rate ($Nm^3$/min) to the supply rate (kg/min) of the powder mixture is preferably 0.5 $Nm^3$/kg or more and 2.5 $Nm^3$/kg or less, more preferably 0.75 $Nm^3$/kg or more and 2.4 $Nm^3$/kg or less, and particularly preferably 1.0 $Nm^3$/kg or more and 2.3 $Nm^3$/kg or less.

When the ratio of the gas supply rate ($Nm^3$/min) to the supply rate (kg/min) of the powder mixture is 0.5 $Nm^3$/kg or more, an increase in the concentration of carbon dioxide and a decrease in the concentration of oxygen in the vicinity of the outlet of the powder mixture can be suppressed.

The ratio of the gas supply rate ($Nm^3$/min) to the supply rate (kg/min) of the powder mixture is preferably higher from the viewpoint of suppressing an increase in the concentration of carbon dioxide and a decrease in the concentration of oxygen in the vicinity of the outlet of the powder mixture. On the other hand, when the supply rate of the powder mixture is reduced or a gas supply facility is increased in size for the purpose of significantly increasing the ratio of the gas supply rate ($Nm^3$/min) to the supply rate (kg/min) of the powder mixture, this leads to an increase in the production cost of the positive-electrode active material. Therefore, the ratio of the gas supply rate ($Nm^3$/min) to the supply rate (kg/min) of the powder mixture is preferably 5.0 $Nm^3$/kg or less.

In the present embodiment, the concentration of oxygen contained in the gas supplied to the inside of the heating facility is preferably 20 vol% or more, more preferably 40 vol% or more, and particularly preferably 60 vol% or more with respect to the volume of the gas supplied to the inside of the heating facility. The upper limit thereof is not particularly limited, and for example, the concentration of oxygen contained in the gas supplied to the inside of the heating facility is 99 vol% or less, 98 vol% or less, and 97 vol% or less with respect to the volume of the gas supplied to the inside of the heating facility.

The upper limit and the lower limit thereof can be randomly combined. For example, the concentration of oxygen contained in the gas supplied to the inside of the heating facility is preferably 20 vol% or more and 99 vol% or less, more preferably 40 vol% or more and 98 vol% or less, and particularly preferably 60 vol% or more and 97 vol% or less with respect to the volume of the gas supplied to the inside of the heating facility.

The concentration of carbon dioxide contained in the gas supplied to the inside of the heating facility is preferably 0.01 vol% or less, and more preferably 0.005 vol% or less, with respect to the volume of the gas supplied to the inside of the heating facility. The lower limit thereof is not particularly limited, and the concentration of carbon dioxide contained in the gas supplied to the inside of the heating facility is preferably 0, and may be 0.001 vol% or less with respect to the volume of the gas supplied to the inside of the heating facility.

The upper limit and the lower limit thereof can be randomly combined. For example, the concentration of carbon dioxide contained in the gas supplied to the inside of the heating facility is preferably 0 vol% or more and 0.01 vol% or less, and more preferably 0 vol% or more and 0.005 vol% or less, with respect to the volume of the gas supplied to the inside of the heating facility.

When the concentration of carbon dioxide contained in the gas supplied to the inside of the heating facility is 0.01 vol% or less with respect to the volume of the gas supplied to the inside of the heating facility, the contact between the powder mixture and oxygen is less likely to be impeded by carbon dioxide, and it becomes possible to manufacture a positive-electrode active material for a lithium secondary battery having high calcining efficiency.

In the present embodiment, the concentration of carbon dioxide contained in the gas exhausted from the gas exhaust port is preferably 20 vol% or less, more preferably 10 vol% or less, and particularly preferably 5 vol% or less with respect to the volume of the gas exhausted from the gas exhaust port.

It is preferable that the concentration of carbon dioxide in the exhaust gas be lower. As a lower limit, for example, the concentration of carbon dioxide contained in the gas exhausted from the gas exhaust port is 0.01 vol% or more, 0.02 vol% or more, or 0.03 vol% or more with respect to the volume of the gas exhausted from the gas exhaust port.

The upper limit and the lower limit thereof can be randomly combined. For example, the concentration of carbon dioxide contained in the gas exhausted from the gas exhaust port is preferably 0.01 vol% or more and 20 vol% or less, more preferably 0.02 vol% or more and 10 vol% or less, and particularly preferably 0.03 vol% or more and 5 vol% or less with respect to the volume of the gas exhausted from the gas exhaust port.

The concentration of carbon dioxide contained in the gas exhausted from the gas exhaust port can be measured by, for example, a gas detector tube.

In the present embodiment, the concentration of carbon dioxide in the heating facility is preferably low from the viewpoint of increasing the calcining efficiency by suppressing the impediment of the contact between the powder mixture and oxygen. Specifically, the concentration of carbon dioxide in the heating facility is preferably 5 vol% or less, and more preferably 1 vol% or less, with respect to the volume of the gas in the heating facility. It is preferable that the concentration of carbon dioxide contained in the gas in the heating facility be low. As a lower limit, for example, the concentration of carbon dioxide contained in the gas exhausted from the gas exhaust port is 0.01 vol% or more, 0.02 vol% or more, or 0.03 vol% or more with respect to the volume of the gas exhausted from the gas exhaust port.

The upper limit and the lower limit thereof can be randomly combined. For example, the concentration of carbon dioxide contained in the gas exhausted from the gas exhaust port is preferably 0.01 vol% or more and 5 vol% or less, more preferably 0.02 vol% or more and 1 vol% or less, and particularly preferably 0.03 vol% or more and 1 vol% or less with respect to the volume of the gas exhausted from the gas exhaust port.

The concentration of carbon dioxide in the heating facility can be controlled by increasing the amount of gas supplied from the gas supply port 25. For example, by supplying a gas having a concentration of carbon dioxide lower than the concentration of carbon dioxide in the heating facility from the gas supply port 25, the concentration of carbon dioxide in the heating facility can be reduced.

In a calcining furnace 38 included in the heating facility 30 of the related art, the exhaust ports 36 and the supply ports 35 are arranged at equal intervals in a supply direction (that is, conveyance direction) R2 in each zone 39. In this case, the gas supply and exhaust directions become the exhaust direction indicated by reference numeral 36a and the supply direction indicated by reference numeral 35a. Then, it is presumed that the calcining efficiency is reduced compared to a method of passing gas from the vicinity of the outlet to the vicinity of the inlet because the concentration of carbon dioxide in a gas phase in the vicinity of the outlet is increased and the concentration of oxygen is reduced.

Compared to the heating facility of the related art, the heating facility used in the present embodiment can bring oxygen into countercurrent contact with the powder mixture. Therefore, it is presumed that the amount of oxygen in contact with the powder mixture can be increased, and the calcining efficiency can be further improved.

The calcining temperature is preferably 500°C or higher, more preferably 600°C or higher, and particularly preferably 700°C or higher. The upper limit is preferably 1100°C or lower, more preferably 1000°C or lower, and particularly preferably 900°C or lower.

The upper limit and the lower limit thereof can be randomly combined, but in the present embodiment, the calcining is preferably performed at 500°C or higher and 1000°C or lower, and more preferably 700°C or higher and 950°C or lower.

The calcining temperature in this specification means the highest temperature in the calcining furnace.

In a case where the heating facility includes a plurality of heating zones, the calcining temperature may vary for each heating zone.

The calcining time is preferably 3 hours or longer and 50 hours or shorter. When the calcining time exceeds 50 hours, the battery performance tends to be substantially deteriorated due to volatilization of lithium. That is, when the calcining time is within 50 hours, the volatilization of lithium can be suppressed. When the calcining time is shorter than 3 hours, the crystals develop poorly, and the battery performance tends to be deteriorated. When the calcining time is 3 hours or longer, the crystals develop favorably, and the battery performance tends to be favorable.

As for the calcining time, the total time from when the temperature reaches the calcining temperature to when the temperature retention is completed is preferably set to 3 hours or longer and 50 hours or shorter. When the total time is 50 hours or shorter, volatilization of lithium can be suppressed, and deterioration of the battery performance can be prevented. When the total time is 3 hours or longer, the development of crystals proceeds favorably, and the battery performance can be improved.

It is preferable that the time until the calcining temperature is reached after the start of temperature increase be 0.5 hours or longer and 20 hours or shorter. When the time from the start of temperature increase until the calcining temperature is reached is in this range, a more uniform lithium metal composite compound can be obtained.

In addition, it is also effective to perform preliminary calcining before the above-mentioned calcining. The temperature of such preliminary calcining is preferably in a range of 300°C or higher and 850°C or lower for 1 hour or longer and 10 hours or shorter.

The powder mixture is conveyed in the heating furnace so that the calcining time as described above is reached. The preliminary calcining may be performed by the heating facility of the present embodiment, or may be performed by another heating apparatus.

The lithium metal composite oxide obtained by the calcining is suitably classified after pulverization and is regarded as a positive-electrode active material applicable to a lithium secondary battery.

In the present embodiment, the manufactured positive-electrode active material for a lithium secondary battery is preferably expressed by Composition Formula (I) below.

$$Li[Li_x(Ni_{(1-y-z-w)}Co_yMn_zM_w)_{1-x}]O_2 \ldots \quad\quad (I)$$

(in Composition Formula (I), $-0.1 \leq x \leq 0.2$, $0 < y \leq 0.5$, $0 \leq z \leq 0.8$, $0 \leq w \leq 0.1$, $1 - y - z - w < 1$, and $y + z + w < 1$ are satisfied, and M is one or more metals selected from the group consisting of Fe, Cu, Ti, Mg, Al, W, B, Mo, Nb, Zn, Sn, Zr, Ga, and V)

From the viewpoint of obtaining a lithium secondary battery having high cycle characteristics, x in Composition Formula (I) is preferably more than 0, more preferably 0.01 or more, and particularly preferably 0.02 or more. In addition, from the viewpoint of obtaining a lithium secondary battery having higher initial Coulombic efficiency, x in Composition Formula (I) is preferably 0.1 or less, more preferably 0.08 or less, and particularly preferably 0.06 or less.

The upper limit and the lower limit of x can be randomly combined. For example, x is preferably more than 0 and 0.1 or less, more preferably 0.01 or more and 0.08 or less, and even more preferably 0.02 or more and 0.06 or less.

In addition, from the viewpoint of obtaining a lithium secondary battery having low battery resistance, y in Composition Formula (I) is preferably 0.005 or more, more preferably 0.01 or more, and particularly preferably 0.05 or more. In addition, from the viewpoint of obtaining a lithium secondary battery having high thermal stability, y in Composition Formula (I) is more preferably 0.35 or less, and particularly preferably 0.33 or less.

The upper limit and the lower limit of y can be randomly combined. For example, y is preferably 0.005 or more and 0.35 or less, more preferably 0.01 or more and 0.33 or less, and particularly preferably 0.05 or more and 0.33 or less.

In addition, from the viewpoint of obtaining a lithium secondary battery having high cycle characteristics, z in Composition Formula (I) is preferably 0 or more, more preferably 0.03 or more, and particularly preferably 0.1 or more. In addition, from the viewpoint of obtaining a lithium secondary battery having high storage characteristics at high temperatures (for example, in an environment at 60°C), z in Composition Formula (I) is preferably 0.4 or less, more preferably 0.38 or less, and particularly preferably 0.35 or less.

The upper limit and the lower limit of z can be randomly combined. For example, z is preferably 0 or more and 0.4 or less, more preferably 0.03 or more and 0.38 or less, and particularly preferably 0.1 or more and 0.35 or less.

In addition, from the viewpoint of obtaining a lithium secondary battery having low battery resistance, w in Composition Formula (I) is preferably more than 0, more preferably 0.0005 or more, and particularly preferably 0.001 or more. In addition, from the viewpoint of obtaining a lithium secondary battery having a high discharge capacity at a high current rate, w in Composition Formula (I) is preferably 0.09 or less, more preferably 0.08 or less, and particularly preferably 0.07 or less.

The upper limit and the lower limit of w can be randomly combined. For example, w is preferably more than 0 and 0.09 or less, more preferably 0.0005 or more and 0.08 or less, and particularly preferably 0.001 or more and 0.07 or less.

M in Composition Formula (I) represents one or more metals selected from the group consisting of Fe, Cu, Ti, Mg, Al, W, B, Mo, Nb, Zn, Sn, Zr, Ga, and V.

Furthermore, M in Composition Formula (I) is preferably one or more metals selected from the group consisting of Ti, Mg, Al, W, B, and Zr from the viewpoint of obtaining a lithium secondary battery having high cycle characteristics, and is more preferably one or more metals selected from the group consisting of Al, W, B, and Zr from the viewpoint of obtaining a lithium secondary battery having high thermal stability.

(Layered Structure)

The crystal structure of the positive-electrode active material for a lithium secondary battery is a layered structure, and more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, from the viewpoint of obtaining a lithium secondary battery having a high discharge capacity, the crystal structure is particularly preferably a hexagonal crystal structure belonging to the space group R-3m, or a monoclinic crystal structure belonging to C2/m.

As the lithium compound used in the present invention, any one or a mixture of two or more of lithium carbonate, lithium nitrate, lithium sulfate, lithium acetate, lithium hydroxide, lithium oxide, lithium chloride, and lithium fluoride can be used. Among these, one or both of lithium hydroxide and lithium carbonate are preferable.

<Lithium Secondary Battery>

Next, a positive electrode using the positive-electrode active material for a lithium secondary battery of the present invention as a positive-electrode active material of a lithium secondary battery, and a lithium secondary battery having the positive electrode will be described along with the configuration of the lithium secondary battery.

An example of the lithium secondary battery of the present embodiment includes a positive electrode, a negative electrode, a separator interposed between the positive electrode and the negative electrode, and an electrolytic solution disposed between the positive electrode and the negative electrode.

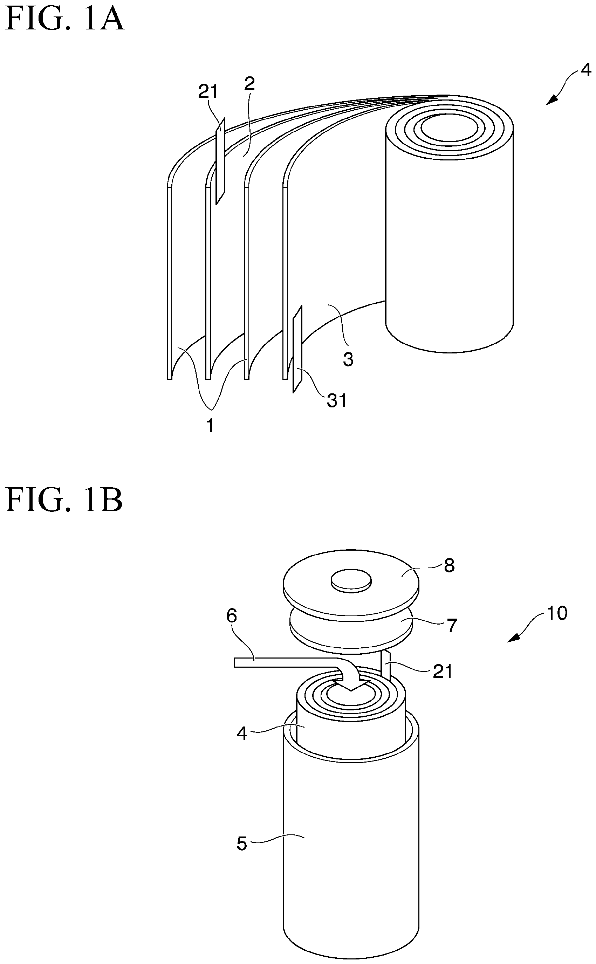

FIGS. 1A and 1B are schematic views illustrating an example of the lithium secondary battery of the present embodiment. A cylindrical lithium secondary battery 10 of the present embodiment is manufactured as follows.

First, as illustrated in FIG. 1A, a pair of separators 1 having a strip shape, a strip-shaped positive electrode 2 having a positive electrode lead 21 at one end, and a strip-shaped negative electrode 3 having a negative electrode lead 31 at one end are stacked in order of the separator 1, the positive electrode 2, the separator 1, and the negative electrode 3 and are wound to form an electrode group 4.

Next, as shown in FIG. 1B, the electrode group 4 and an insulator (not illustrated) are accommodated in a battery can 5, the can bottom is then sealed, the electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary battery having the electrode group 4, a shape defined by IEC60086, which is a standard for a battery defined by the International Electrotechnical Commission (IEC), or by JIS C 8500, can be adopted. For example, shapes such as a cylindrical shape and a square shape can be adopted.

Furthermore, the lithium secondary battery is not limited to the wound type configuration, and may have a stacked type configuration in which a stacked structure of a positive electrode, a separator, a negative electrode, and a separator is repeatedly stacked. The stacked type lithium secondary battery can be exemplified by a so-called coin type battery, a button type battery, or a paper type (or sheet type) battery.

Hereinafter, each configuration will be described in order.

(Positive Electrode)

The positive electrode of the present embodiment can be manufactured by first adjusting a positive electrode mixture containing a positive electrode active material, a conductive material, and a binder, and causing a positive electrode current collector to hold the positive electrode mixture.

(Conductive Material)

A carbon material can be used as the conductive material included in the positive electrode of the present embodiment. As the carbon material, there are graphite powder, carbon black (for example, acetylene black), a fibrous carbon material, and the like. Since carbon black is fine particles and has a large surface area, the addition of a small amount of carbon black to the positive electrode mixture increases the conductivity inside the positive electrode and thus can improve the charge and discharge efficiency and output characteristics. However, when too much carbon black is added, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, the proportion can be reduced.

(Binder)

A thermoplastic resin can be used as the binder included in the positive electrode of the present embodiment.

As the thermoplastic resin, fluorine resins such as polyvinylidene fluoride (hereinafter, sometimes referred to as PVDF), polytetrafluoroethylene (hereinafter, sometimes referred to as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.

These thermoplastic resins may be used as a mixture of two or more. By using a fluorine resin and a polyolefin resin as the binder and setting the ratio of the fluorine resin to the entire positive electrode mixture to 1 mass% or more and 10 mass% or less and the ratio of the polyolefin resin to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, from the viewpoint of easy processing and low cost, it is preferable to use Al as the forming material and process Al into a thin film.

As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the paste of the obtained positive electrode mixture to at least one side of the positive electrode current collector, drying the paste, and pressing the paste to be fixed.

In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes referred to as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method mentioned above.

(Negative Electrode)

The negative electrode included in the lithium secondary battery of the present embodiment may be capable of being doped with or dedoped from lithium ions at a potential lower than that of the positive electrode, and an electrode in which a negative electrode mixture containing a negative electrode active material is held by a negative electrode current collector, and an electrode formed of a negative electrode active material alone can be adopted.

(Negative Electrode Active Material)

As the negative electrode active material included in the negative electrode, materials that can be doped with or dedoped from lithium ions at a potential lower than that of the positive electrode, such as carbon materials, chalcogen compounds (oxides, sulfides, and the like), nitrides, metals, and alloys can be adopted.

As the carbon materials that can be used as the negative electrode active material, graphite such as natural graphite and artificial graphite, cokes, carbon black, pyrolytic carbons, carbon fibers, and an organic polymer compound calcined body can be adopted.

As the oxides that can be used as the negative electrode active material, oxides of silicon expressed by the formula SiOx (where, x is a positive real number) such as $SiO_2$ and SiO; oxides of titanium expressed by the formula TiOx (where x is a positive real number) such as $TiO_2$ and TiO; oxides of vanadium expressed by the formula VOx (where x is a positive real number) such as $V_2O_5$ and $VO_2$; oxides of iron expressed by the formula FeOx (where x is a positive real number) such as $Fe_3O_4$, $Fe_2O_3$, and FeO; oxides of tin expressed by the formula SnOx (where x is a positive real number) such as $SnO_2$ and SnO; oxides of tungsten expressed by a general formula WOx (where, x is a positive real number) such as $WO_3$ and $WO_2$; and metal composite oxides containing lithium and titanium or vanadium such as $Li_4Ti_5O_{12}$ and $LiVO_2$ can be adopted.

As the sulfides that can be used as the negative electrode active material, sulfides of titanium expressed by the formula TiSx (where, x is a positive real number) such as Ti2S3, TiS2, and TiS; sulfides of vanadium expressed by the formula $VS_x$ (where x is a positive real number) such $V_3S_4$, $VS_2$, and VS; sulfides of iron expressed by the formula FeSx (where x is a positive real number) such as Fe3S4, FeS2, and FeS; sulfides of molybdenum expressed by the formula MoSx (where x is a positive real number) such as $Mo_2S_3$ and $MoS_2$; sulfides of tin expressed by the formula SnSx (where x is a positive real number) such as SnS2 and SnS; sulfides of tungsten expressed by $WS_x$ (where x is a positive real number) such as WS2; sulfides of antimony expressed by the formula SbSx (where x is a positive real number) such as $Sb_2S_3$; and sulfides of selenium expressed by the formula SeSx (where x is a positive real number) such as $Se_5S_3$, SeS2, and SeS can be adopted.

As the nitrides that can be used as the negative electrode active material, lithium-containing nitrides such as $Li_3N$ and $Li_{3-x}A_xN$ (where A is either one or both of Ni and Co, and $0 < x < 3$ is satisfied) can be adopted.

These carbon materials, oxides, sulfides, and nitrides may be used singly or in combination of two or more. In addition, these carbon materials, oxides, sulfides, and nitrides may be either crystalline or amorphous.

Moreover, as the metals that can be used as the negative electrode active material, lithium metal, silicon metal, tin metal, and the like can be adopted.

As the alloys that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be adopted.

These metals and alloys are mainly used alone as an electrode after being processed into, for example, a foil shape.

Among the above-mentioned negative electrode active materials, the carbon material mainly including graphite such as natural graphite and artificial graphite is preferably used because the potential of the negative electrode hardly changes from the uncharged state to the fully charged state during charging (the potential flatness is good), the average discharge potential is low, and the capacity retention ratio during repeated charging and discharging is high (the cycle characteristics are good). The shape of the carbon material may be, for example, a flaky shape such as natural graphite, a spherical shape such as mesocarbon microbeads, a fibrous shape such as graphitized carbon fiber, or an aggregate of fine powder.

The negative electrode mixture described above may contain a binder as necessary. As the binder, a thermoplastic resin can be adopted, and specifically, PVDF, thermoplastic polyimide, carboxymethylcellulose, polyethylene, and polypropylene can be adopted.

(Negative Electrode Current Collector)

As the negative electrode current collector included in the negative electrode, a strip-shaped member formed of a metal material, such as Cu, Ni, and stainless steel, as the forming material can be adopted. Among these, it is preferable to use Cu as the forming material and process Cu into a thin film because Cu is less likely to form an alloy with lithium and can be easily processed.

As a method of causing the negative electrode current collector to hold the negative electrode mixture, similarly to the case of the positive electrode, a method using press-forming, or a method of forming the negative electrode mixture into a paste using a solvent or the like, applying the paste onto the negative electrode current collector, drying the paste, and pressing the paste to be compressed can be adopted.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during battery use (during charging and discharging).

In addition, the porosity of the separator is preferably 30 vol% or more and 80 vol% or less, and more preferably 40 vol% or more and 70 vol% or less with respect to the volume of the separator. The separator may be a laminate of separators having different porosities.

(Electrolytic Solution)

The electrolytic solution included in the lithium secondary battery of the present embodiment contains an electrolyte and an organic solvent.

As the electrolyte contained in the electrolytic solution, $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB refers to bis(oxalato)borate), LiFSI (here, FSI refers to bis(fluorosulfonyl)imide), lower aliphatic carboxylic acid lithium compounds, and lithium compounds such as $LiAlCl_4$ can be adopted, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent included in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by further introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charged and discharged at a high current rate, being less likely to deteriorate even during long-term use, and being non-degradable even in a case where a graphite material such as natural graphite or artificial graphite is used as the negative electrode active material.

Furthermore, as the electrolytic solution, it is preferable to use an electrolytic solution containing a lithium compound containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. Inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ can be adopted, and a mixture of two or more thereof may be used. By using these solid electrolytes, the safety of the lithium secondary battery may be further enhanced.

In addition, in a case of using a solid electrolyte in the lithium secondary battery of the present embodiment, there may be cases where the solid electrolyte plays a role of the separator, and in such a case, the separator may not be required.

The lithium secondary battery having the above configuration uses the positive-electrode active material for a lithium secondary battery manufactured by the above-described method for manufacturing a positive-electrode active material for a lithium secondary battery according to the present embodiment described above. Therefore, a lithium secondary battery having a small number of impurities such as residual lithium carbonate can be obtained.

An aspect of the present invention is a method for manufacturing a positive-electrode active material for a lithium secondary battery, including: a step of continuously calcining a powder mixture containing a lithium compound and a positive-electrode active material precursor in a heating facility of a fixed bed conveyance system, while conveying the powder mixture in a direction from an inlet to an outlet of the heating facility and heating the powder mixture, in which, with respect to a conveyance direction of the powder mixture, the amount of a gas supplied from ah outside of the heating facility to ah inside of the heating facility in a region from a center portion of the heating facility to the outlet is larger than the amount of a gas supplied from the outside of the heating facility to the inside of the heating facility in a region from the center portion of the heating facility to the inlet, and the amount of a gas exhausted from the inside of the heating facility to the outside of the heating facility in the region from the center portion of the heating facility to the inlet is larger than the amount of a gas exhausted from the inside of the heating facility to the outside of the heating facility in the region from the center portion of the heating facility to the outlet,

the heating facility includes at least one or more gas supply ports in the vicinity of the outlet, and at least one or more gas exhaust ports in the vicinity of the inlet,

all of the gas supplied from the outside of the heating facility to the inside of the heating facility is supplied from the at least one or more gas supply ports,

all of the gas supplied from the outside of the heating facility to the inside of the heating facility and a gas generated by the calcining of the powder mixture is exhausted from the at least one or more gas exhaust ports,

the temperature at which the powder mixture is calcined is 700°C or higher and 950°C or lower, and

a time for which the powder mixture is calcined is 3 hours or longer and 7 hours or shorter.

Another aspect of the present invention is a method for manufacturing a positive-electrode active material for a lithium secondary battery, including: a step of continuously calcining a powder mixture containing a lithium compound and a positive-electrode active material precursor in a heating facility of a fixed bed conveyance system, while conveying the powder mixture in a direction from an inlet to an outlet of the heating facility and heating the powder mixture, in which, with respect to a conveyance direction of the powder mixture, the amount of a gas supplied from ah outside of the heating facility to ah inside of the heating facility in a region from a center portion of the heating facility to the outlet is larger than the amount of a gas supplied from the outside of the heating facility to the inside of the heating facility in a region from the center portion of the heating facility to the inlet, and the amount of a gas exhausted from the inside of the heating facility to the outside of the heating facility in the region from the center portion of the heating facility to the inlet is larger than the amount of a gas exhausted from the inside of the heating facility to the outside of the heating facility in the region from the center portion of the heating facility to the outlet,

the heating facility includes at least one or more gas supply ports in the vicinity of the outlet, and at least one or more gas exhaust ports in the vicinity of the inlet,

all of the gas supplied from the outside of the heating facility to the inside of the heating facility is supplied from the at least one or more gas supply ports,

all of the gas supplied from the outside of the heating facility to the inside of the heating facility and a gas generated by the calcining of the powder mixture is exhausted from the at least one or more gas exhaust ports,

the temperature at which the powder mixture is calcined is 700°C or higher and 950°C or lower, and

the ratio of a gas supply rate ($Nm^3$/min) to a supply rate (kg/min) of the powder mixture is 1.0 $Nm^3$/kg or more and 2.5 $Nm^3$/kg or more.

EXAMPLES

Next, the present invention will be described in more detail with reference to examples.

In the examples, evaluation of the positive-electrode active material for a lithium secondary battery was performed as follows.

<Compositional Analysis>

The compositional analysis of the positive-electrode active material for a lithium secondary battery manufactured by the method described below was performed by using an inductively-coupled plasma emission analyzer (SPS 3000, manufactured by SII Nano Technology Inc.) after dissolving the obtained lithium metal composite oxide powder in hydrochloric acid.

<Quantification of Residual Lithium Carbonate in Positive-Electrode Active Material for Lithium Secondary Battery (neutralization titration)>

20 g of the positive-electrode active material for a lithium secondary battery and 100 g of pure water were put into a 100 mL beaker and stirred for 5 minutes. After the stirring, the positive-electrode active material for a lithium secondary battery was filtered, 0.1 mol/L hydrochloric acid was added dropwise into 60 g of the remaining filtrate, and the pH of the filtrate was measured with a pH meter. Assuming that the titration amount of hydrochloric acid at pH = 8.3 $\pm$ 0.1 was AmL and the titration amount of hydrochloric acid at pH = 4.5 $\pm$ 0.1 was BmL, the concentration of lithium carbonate remaining in the positive-electrode active material for a lithium secondary battery was calculated from the following formula. In the following formula, the molecular weight of lithium carbonate was calculated using Li; 6.941, C; 12, and O; 16 as each atomic weight.

$$\text{Lithium carbonate concentration (\%)} = 0.1 \times (B - A) / 1000 \times 73.882 / (20 \times 60 / 100) \times 100$$

<Heating Facility>

A heating facility of a fixed bed conveyance system was used. Specifically, the heating facility is a roller hearth kiln (manufactured by NORITAKE CO., LIMITED) having a plurality of heating zones at equal intervals, and one gas supply port and one gas exhaust port are provided for each zone. In Examples 1 to 4 below, regarding the supply of a gas, all was supplied from a region of 80% to 100% from an inlet when the total length of a calcining furnace was 100% with respect to a powder conveyance direction, and all was exhausted from a region of 0% to 20% from the inlet. Assuming that the total length of the calcining furnace was 100%, the gas exhaust port located in the region from 80% to 100% from the inlet and the gas supply port located in the region from 0% to 20% from the inlet were closed and not used. Accordingly, the gas was brought into countercurrent contact with the powder mixture.

In Comparative Examples 1 to 3 below, supply and exhaust of the gas were performed by all zones, and the supply amounts of the gas were made uniform in all zones.

<Measurement of Concentration of Carbon Dioxide>

The concentration of carbon dioxide contained in the gas exhausted to the outside of the heating facility was measured as follows. The gas discharged from the gas exhaust port was sampled by a gas-sampling device (manufactured by Gastec Corporation), and the concentration of carbon dioxide was measured using a gas detector tube (manufactured by Gastec Corporation).

(Example 1)

[Mixing Step]

Lithium carbonate ($Li_2CO_3$) and metal composite hydroxide ($Ni_{0.55}Co_{0.21}Mn_{0.24}(OH)_2$) were weighed and mixed so that Li / (Ni + Co + Mn) = 1.07 (molar ratio) was achieved, whereby a mixed powder was obtained.

[Preliminary Calcining Step]

Next, the powder mixture was calcined at 760°C for 3 hours.

[Main Calcining Step]

Subsequently, the calcined product obtained in the preliminary calcining step was put into the roller hearth kiln, and calcining was performed at 850°C for 5 hours while passing a mixed gas of oxygen and nitrogen containing 90 vol% of oxygen from the gas supply port so that the ratio of a gas supply rate ($Nm^3/min$) to the supply rate (kg/min) of the powder mixture became 1.61 $Nm^3/kg$.

The concentration of carbon dioxide contained in the gas exhausted to the outside of the heating facility was 0.26 vol% with respect to the volume of the gas exhausted to the outside of the heating facility.

Thereafter, the resultant was cooled to room temperature and crushed to obtain a positive-electrode active material for a lithium secondary battery 1.

Compositional analysis of the positive-electrode active material for a lithium secondary battery 1 was performed, and when the composition was made to correspond to General Formula (I), x = 0.03, y = 0.210, z = 0.240, and w = 0.00 were obtained.

In addition, the amount of residual lithium carbonate was 0.12 mass%.

(Example 2)

[Mixing Step and Preliminary Calcining Step]

A mixing step and a preliminary calcining step were performed in the same manner as in Example 1.

[Main Calcining Step]

Subsequently, a main calcining step was the same as in Example 1 except that the calcined product obtained in the preliminary calcining step was put into the roller hearth kiln and calcined at 870°C for 5 hours.
The concentration of carbon dioxide contained in the gas exhausted to the outside of the heating facility was 0.27 vol% with respect to the volume of the gas exhausted to the outside of the heating facility.
Thereafter, the resultant was cooled to room temperature and crushed to obtain a positive-electrode active material for a lithium secondary battery 2.
Compositional analysis of the positive-electrode active material for a lithium secondary battery 2 was performed, and when the composition was made to correspond to General Formula (I), $x = 0.04$, $y = 0.210$, $z = 0.241$, and $w = 0.00$ were obtained.
In addition, the amount of residual lithium carbonate was 0.09 mass%.

(Example 3)

[Mixing Step and Preliminary Calcining Step]

A mixing step and a preliminary calcining step were performed in the same manner as in Example 1.

[Main Calcining Step]

Subsequently, a main calcining step was the same as in Example 2 except that the calcined product obtained in the preliminary calcining step was put into the roller hearth kiln and calcined while passing a gas containing 90 vol% of oxygen from the gas supply port so that the ratio of a gas supply rate ($Nm^3$/min) to the supply rate (kg/min) of the powder mixture became 1.14 $Nm^3$/kg.
The concentration of carbon dioxide contained in the gas exhausted to the outside of the heating facility was 0.27 vol% with respect to the volume of the gas exhausted to the outside of the heating facility.
Thereafter, the resultant was cooled to room temperature and crushed to obtain a positive-electrode active material for a lithium secondary battery 3.
Compositional analysis of the positive-electrode active material for a lithium secondary battery 3 was performed, and when the composition was made to correspond to General Formula (I), $x = 0.03$, $y = 0.210$, $z = 0.242$, and $w = 0.00$ were obtained.
In addition, the amount of residual lithium carbonate was 0.11 mass%.

(Example 4)

[Mixing Step]

Lithium carbonate ($Li_2CO_3$) and metal composite hydroxide ($Ni_{0.51}Co_{0.225}Mn_{0.265}(OH)_2$) were weighed and mixed so that Li / (Ni + Co + Mn) = 1.05 (molar ratio) was achieved, whereby a mixed powder was obtained.

[Main Calcining Step]

Subsequently, the powder mixture was put into the roller hearth kiln, and calcining was performed at 870°C for 5.6 hours while passing a gas containing 90 vol% of oxygen from the gas supply port so that the ratio of a gas supply rate ($Nm^3$/min) to the supply rate (kg/min) of the powder mixture became 1.64 $Nm^3$/kg.
The concentration of carbon dioxide contained in the gas exhausted to the outside of the heating facility was 4.8 vol% with respect to the volume of the gas exhausted to the outside of the heating facility.
Thereafter, the resultant was cooled to room temperature and crushed to obtain a positive-electrode active material for a lithium secondary battery 4.
Compositional analysis of the positive-electrode active material for a lithium secondary battery 4 was performed, and when the composition was made to correspond to General Formula (I), $x = 0.02$, $y = 0.224$, $z = 0.262$, and $w = 0.00$

were obtained.

In addition, the amount of residual lithium carbonate was 0.05 mass%.

(Comparative Example 1)

[Mixing Step and Preliminary Calcining Step]

A mixing step and a preliminary calcining step were performed in the same manner as in Example 1.

[Main Calcining Step]

Subsequently, a main calcining step was performed under the same conditions as in Example 1 except that the calcined product obtained in the preliminary calcining step was put into the roller hearth kiln and a gas containing 90 vol% of oxygen was uniformly passed from the gas supply ports of all the zones so that the ratio of a gas supply rate ($Nm^3$/min) to the supply rate (kg/min) of the powder mixture became 1.61 $Nm^3$/kg.

The concentration of carbon dioxide contained in the gas exhausted to the outside of the heating facility was 0.24 vol% with respect to the volume of the gas exhausted to the outside of the heating facility.

Thereafter, the resultant was cooled to room temperature and crushed to obtain a positive-electrode active material for a lithium secondary battery 5.

Compositional analysis of the positive-electrode active material for a lithium secondary battery 5 was performed, and when the composition was made to correspond to General Formula (I), x = 0.03, y = 0.210, z = 0.241, and w = 0.00 were obtained.

In addition, the amount of residual lithium carbonate was 0.26 mass%.

(Comparative Example 2)

[Mixing Step and Preliminary Calcining Step]

A mixing step and a preliminary calcining step were performed in the same manner as in Example 1.

[Main Calcining Step]

Subsequently, a main calcining step was performed under the same conditions as in Example 1 except that the calcined product obtained in the preliminary calcining step was put into the roller hearth kiln and a gas containing 90 vol% of oxygen was uniformly passed from the gas supply ports of all the zones so that the ratio of a gas supply rate ($Nm^3$/min) to the supply rate (kg/min) of the powder mixture became 2.30 $Nm^3$/kg.

The concentration of carbon dioxide contained in the gas exhausted to the outside of the heating facility was 0.25 vol% with respect to the volume of the gas exhausted to the outside of the heating facility.

Thereafter, the resultant was cooled to room temperature and crushed to obtain a positive-electrode active material for a lithium secondary battery 6.

Compositional analysis of the positive-electrode active material for a lithium secondary battery 6 was performed, and when the composition was made to correspond to General Formula (I), x = 0.03, y = 0.209, z = 0.243, and w = 0.00 were obtained.

In addition, the amount of residual lithium carbonate was 0.20 mass%.

(Comparative Example 3)

[Mixing Step]

The mixing step was performed in the same manner as in Example 4.

[Main Calcining Step]

Subsequently, the powder mixture was put into the roller hearth kiln, and calcining was performed at 870°C for 5.6 hours while uniformly passing a gas containing 90 vol% of oxygen from the gas supply ports of all the zones so that the ratio of a gas supply rate ($Nm^3$/min) to the supply rate (kg/min) of the powder mixture became 1.64 $Nm^3$/kg.

The concentration of carbon dioxide contained in the gas exhausted to the outside of the heating facility was 4.8 vol% with respect to the volume of the gas exhausted to the outside of the heating facility.

Thereafter, the resultant was cooled to room temperature and crushed to obtain a positive-electrode active material for a lithium secondary battery 7.

Compositional analysis of the positive-electrode active material for a lithium secondary battery 7 was performed, and when the composition was made to correspond to General Formula (I), x = 0.03, y = 0.225, z = 0.263, and w = 0.00 were obtained.

In addition, the amount of residual lithium carbonate was 0.11 mass%.

Tables 1 and 2 below summarize the results of Examples 1 to 4 and Comparative Examples 1 to 3 and the like.

[Table 1]

|  | Composition | | | |
|---|---|---|---|---|
|  | x | y | z | w |
| Example 1 | 0.03 | 0.210 | 0.240 | 0 |
| Example 2 | 0.04 | 0.210 | 0.241 | 0 |
| Example 3 | 0.03 | 0.210 | 0.242 | 0 |
| Example 4 | 0.02 | 0.224 | 0.262 | 0 |
| Comparative Example 1 | 0.03 | 0.210 | 0.241 | 0 |
| Comparative Example 2 | 0.03 | 0.209 | 0.243 | 0 |
| Comparative Example 3 | 0.03 | 0.225 | 0.263 | 0 |

[Table 2]

|  | Calcining step | | | | | Exhaust gas $CO_2$ concentration [vol%] | Remaining $Li_2CO_3$ [mass%] |
|---|---|---|---|---|---|---|---|
|  | Temperature [°C] | Time [h] | Gas amount [$Nm^3$/kg] | Gas supply position | Gas exhaust position | | |
| Example 1 | 850 | 5 | 1.61 | Entire amount at position of 80% to 100% from inlet | Entire amount at position of 0% to 20% from inlet | 0.26 | 0.12 |
| Example 2 | 870 | 5 | 1.61 | Entire amount at position of 80% to 100% from inlet | Entire amount at position of 0% to 20% from inlet | 0.27 | 0.09 |
| Example 3 | 870 | 5 | 1.14 | Entire amount at position of 80% to 100% from inlet | Entire amount at position of 0% to 20% from inlet | 0.27 | 0.11 |
| Example 4 | 870 | 5.6 | 1.64 | Entire amount at position of 80% to 100% from inlet | Entire amount at position of 0% to 20% from inlet | 4.8 | 0.05 |

(continued)

| | Calcining step | | | | | Exhaust gas $CO_2$ concentration [vol%] | Remaining $Li_2CO_3$ [mass%] |
|---|---|---|---|---|---|---|---|
| | Temperature [°C] | Time [h] | Gas amount [Nm³/kg] | Gas supply position | Gas exhaust position | | |
| Comparative Example 1 | 850 | 5 | 1.61 | Equal amount in all zones | Equal amount in all zones | 0.24 | 0.26 |
| Comparative Example 2 | 850 | 5 | 2.30 | Equal amount in all zones | Equal amount in all zones | 0.25 | 0.20 |
| Comparative Example 3 | 870 | 5.6 | 1.64 | Equal amount in all zones | Equal amount in all zones | 4.8 | 0.11 |

Example 1 and Comparative Example 1 were the same in the mixing step and the preliminary calcining step, and were different only in the gas supply position and the gas exhaust position in the main calcining step. In Example 1, supply of all of the gas was performed at a position of 80% to 100% from the inlet and exhaust of all of the gas was performed at a position of 0% to 20% from the inlet, while in Comparative Example 1, supply and exhaust of the gas were performed in all zones with equal amounts. As a result, in Comparative Example 1, the amount of residual lithium carbonate contained in the positive-electrode active material for a lithium secondary battery after the main calcining step was 0.26 mass% with respect to the total mass of the positive-electrode active material for a lithium secondary battery, while in Example 1, the amount of residual lithium carbonate contained in the positive-electrode active material for a lithium secondary battery after the main calcining step was 0.12 mass% with respect to the total mass of the positive-electrode active material for a lithium secondary battery.

Similarly, Example 4 and Comparative Example 3 were same in the mixing step and the preliminary calcining step, and were different only in the gas supply position and the gas exhaust position in the main calcining step. In Example 4, supply of all of the gas was performed at a position of 80% to 100% from the inlet and exhaust of all of the gas was performed at a position of 0% to 20% from the inlet, while in Comparative Example 3, supply and exhaust of the gas were performed in all zones with equal amounts. As a result, in Comparative Example 3, the amount of residual lithium carbonate contained in the positive-electrode active material for a lithium secondary battery after the main calcining step was 0.11 mass% with respect to the total mass of the positive-electrode active material for a lithium secondary battery, while in Example 1, the amount of residual lithium carbonate contained in the positive-electrode active material for a lithium secondary battery after the main calcining step was 0.05 mass% with respect to the total mass of the positive-electrode active material for a lithium secondary battery.

That is, it was confirmed that in Examples 1 to 4 to which the present invention was applied, the amount of residual lithium carbonate contained in the obtained positive-electrode active material for a lithium secondary battery was significantly reduced compared to Comparative Examples 1 to 3, and the calcining efficiency was high.

Industrial Applicability

According to the present invention, it is possible to provide a method for manufacturing a positive-electrode active material for a lithium secondary battery of a fixed bed conveyance system with high calcining efficiency.

Reference Signs List

1: separator, 2: positive electrode, 3: negative electrode, 4: electrode group, 5: battery can, 6: electrolytic solution, 7: top insulator, 8: sealing body, 10: lithium secondary battery, 21: positive electrode lead, 31: negative electrode lead, 20, 30: heating facility, 22, 32: sheath, 23a, 23b, 33a, 33b: substitution chamber, 24, 34: outlet, 25, 35: gas supply port, 26, 36: gas exhaust port, 27, 37: inlet, 28, 38: calcining furnace, 29, 39: zone, R1, R2: supply direction

**Claims**

**1.** A method for manufacturing a positive-electrode active material for a lithium secondary battery, comprising:

a step of continuously calcining a powder mixture containing a lithium compound and a positive-electrode active material precursor in a heating facility of a fixed bed conveyance system, while conveying the powder mixture in a direction from an inlet to an outlet of the heating facility and heating the powder mixture,

wherein, with respect to a conveyance direction of the powder mixture, an amount of a gas supplied from an outside of the heating facility to an inside of the heating facility in a region from a center portion of the heating facility to the outlet is larger than an amount of a gas supplied from the outside of the heating facility to the inside of the heating facility in a region from the center portion of the heating facility to the inlet, and an amount of a gas exhausted from the inside of the heating facility to the outside of the heating facility in the region from the center portion of the heating facility to the inlet is larger than an amount of a gas exhausted from the inside of the heating facility to the outside of the heating facility in the region from the center portion of the heating facility to the outlet.

2. The method for manufacturing a positive-electrode active material for a lithium secondary battery according to Claim 1,

   wherein the heating facility includes at least one or more gas supply ports in the vicinity of the outlet, and at least one or more gas exhaust ports in the vicinity of the inlet,

   all of the gas supplied from the outside of the heating facility to the inside of the heating facility is supplied from the at least one or more gas supply ports, and

   all of the gas supplied from the outside of the heating facility to the inside of the heating facility and a gas generated by the calcining of the powder mixture is exhausted from the at least one or more gas exhaust ports.

3. The method for manufacturing a positive-electrode active material for a lithium secondary battery according to Claim 1 or 2,

   wherein, in the calcining step, the gas supplied from the outside of the heating facility to the inside of the heating facility is brought into countercurrent contact with the powder mixture.

4. The method for manufacturing a positive-electrode active material for a lithium secondary battery according to Claim 2 or 3,

   wherein, in the calcining step, the number of gas supply ports is one.

5. The method for manufacturing a positive-electrode active material for a lithium secondary battery according to any one of Claims 1 to 4,

   wherein the positive-electrode active material for a lithium secondary battery is expressed by Composition Formula (I)

$$\mathrm{Li[Li_x(Ni_{(1-y-z-w)}Co_yMn_zM_w)_{1-x}]O_2} \dots \qquad (I)$$

(in Composition Formula (I), $-0.1 \leq x \leq 0.2$, $0 < y \leq 0.5$, $0 \leq z \leq 0.8$, $0 \leq w \leq 0.1$, $1 - y - z - w < 1$, and $y + z + w < 1$ are satisfied, and M is one or more metals selected from the group consisting of Fe, Cu, Ti, Mg, Al, W, B, Mo, Nb, Zn, Sn, Zr, Ga, and V).

6. The method for manufacturing a positive-electrode active material for a lithium secondary battery according to any one of Claims 1 to 5,

   wherein a ratio of a gas supply rate ($\mathrm{Nm^3/min}$) to a supply rate (kg/min) of the powder mixture is $0.5\,\mathrm{Nm^3/kg}$ or more.

7. The method for manufacturing a positive-electrode active material for a lithium secondary battery according to any one of Claims 1 to 6,

   wherein a concentration of oxygen contained in the gas supplied to the inside of the heating facility is 20 vol% or more with respect to a volume of the gas supplied to the inside of the heating facility.

8. The method for manufacturing a positive-electrode active material for a lithium secondary battery according to any one of Claims 1 to 7,

   wherein the calcining step is performed at 500°C or higher and 1100°C or lower.

9. The method for manufacturing a positive-electrode active material for a lithium secondary battery according to any one of Claims 1 to 8,

   wherein the heating facility is a roller hearth kiln.

10. The method for manufacturing a positive-electrode active material for a lithium secondary battery according to any one of Claims 1 to 9,
wherein a concentration of carbon dioxide contained in the gas exhausted to the outside of the heating facility is 20 vol% or less with respect to a volume of the gas exhausted to the outside of the heating facility.

## FIG. 1A

## FIG. 1B

FIG. 2

EP 3 683 869 A1

FIG. 3

## INTERNATIONAL SEARCH REPORT

| International application No. |
| --- |
| PCT/JP2018/033216 |

A. CLASSIFICATION OF SUBJECT MATTER
Int. Cl. H01M4/1391(2010.01)i, C01G53/00(2006.01)i, H01M4/505(2010.01)i,
H01M4/525(2010.01)i

According to International Patent Classification (IPC) or to both national classification and IPC

B. FIELDS SEARCHED

Minimum documentation searched (classification system followed by classification symbols)
Int. Cl. H01M4/1391, C01G53/00, H01M4/505, H01M4/525

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2001-35942 A (SEIMI CHEMICAL CO., LTD.) 09 February 2001, claims, paragraphs [0017], [0025], examples (Family: none) | 1-10 |
| Y | JP 2006-4724 A (NIKKO MATERIALS CO., LTD.) 05 January 2006, claims, paragraph [0027], examples (Family: none) | 1-10 |
| Y | JP 2000-55564 A (NGK INSULATORS, LTD.) 25 February 2000, claims, paragraphs [0007], [0010], all drawings (Family: none) | 1-10 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05.10.2018 | 23.10.2018 |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**EP 3 683 869 A1**

**INTERNATIONAL SEARCH REPORT**

| International application No. |
|---|
| PCT/JP2018/033216 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-19784 A (SUMITOMO METAL MINING CO., LTD.) 29 January 2009, claims, paragraphs [0004], [0005], [0042], all drawings (Family: none) | 1-10 |
| Y | JP 2009-262040 A (OJI PAPER CO., LTD.) 12 November 2009, paragraphs [0041], [0052], [0053], all drawings (Family: none) | 1-10 |
| Y | WO 2012/144369 A1 (ASAHI KASEI CHEMICALS CORP.) 26 October 2012, paragraph [0061] & US 2014/0194642 A1, paragraph [0097] & EP 2700447 A1 & CN 103476491 A & KR 10-2013-0133866 A | 1-10 |
| P, X | JP 2017-200859 A (SUMITOMO CHEMICAL CO., LTD.) 09 November 2017, claims, paragraph [0017], examples (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017175657 A
- JP H5062678 B

- JP 2002201028 A